# EUROPEAN PATENT APPLICATION

(11) **EP 3 001 290 A1**
(43) Date of publication of application: **30.03.2016**
(21) Application number: 13897610.5
(22) Date of filing: 15.11.2013
(51) Int. Cl.: G06F 3/041

(54) **DATA REPORTING METHOD, APPARATUS AND TERMINAL DEVICE**

(71) Applicant: Huawei Device Co., Ltd., Shenzhen, Guangdong 518129 (CN)
(72) Inventor: ZHONG, Guanghua, Shenzhen Guangdong 518129 (CN)
(74) Representative: Gill Jennings & Every LLP
(86) International application number: PCT/CN2013/087227
(87) International publication number: WO 2015/070436

(57) **Abstract**

The present application provides a data reporting method and apparatus, and a terminal device, where the data method includes: acquiring current touch operation information; determining, by using the current touch operation information, an area that is on a current interface of a touchscreen and in which the current touch operation information is located, and using the area as an operation area; determining attribute information of the operation area based on a correspondence between an area and attribute information, where the attribute information of the operation area includes a rate type of an area reported point of the operation area and touch operation information to which the operation area can respond; and determining, from the current touch operation information according to the current touch operation information and the attribute information of the operation area, touch data reported to an application processor, and reporting the data. According to the data reporting method and apparatus, and the terminal device that are provided in the present application, a quantity of interrupts is reduced for an application processor, and usage of the application processor is decreased, thereby reducing power consumption generated when the application processor processes a touchscreen interrupt event.

## Description

### TECHNICAL FIELD

The present invention relates to the field of data processing technologies, and in particular, to a data reporting method and apparatus, and a terminal device.

### BACKGROUND

A touchscreen system generally includes two parts: a touchscreen controller and a touch detection apparatus. The touch detection apparatus is adapted to detect touch operation information on a touchscreen, and the touchscreen controller is adapted to receive the touch operation information from the touch detection apparatus, convert the touch operation information into touch data, and then send the touch data to an application processor. In addition, the touchscreen controller can receive a command sent by the application processor and execute the command.

In the prior art, when a touch operation occurs, a touchscreen system generally reports touch data to an upper-layer application program by using a highest report rate. For example, in a tapping event, from touching a touchscreen to leaving the touchscreen by a user, the touchscreen system reports four to eight points to the upper-layer application program. When reporting touch data each time, the touchscreen system causes an application processor to generate an interrupt for data processing. In an actual test, when the application processor processes interrupt information such as a tapping operation and sliding operation on a touchscreen, a 100-130 mA system current is increased, which greatly increases system power consumption, and most of the power consumption thereof is generated by the application processor. Currently, reducing power consumption generated when the application processor processes a touchscreen interrupt event is an urgent problem to resolve.

### SUMMARY

In view of this, the present invention provides a data reporting method and apparatus, and a terminal device, which are used to resolve a problem in the prior art that power consumption generated when an application processor processes a touchscreen interrupt event is relatively large, and technical solutions of the present invention are as follows:

According to a first aspect, a data reporting method is provided, including:
receiving current touch operation information;
determining, by using the current touch operation information, an area that is on a current interface of a touchscreen and in which the current touch operation information is located, and using the area as an operation area;
determining attribute information of the operation area based on a correspondence between an area and attribute information, where the attribute information of the operation area includes a rate type of an area reported point of the operation area and touch operation information to which the operation area can respond; and
determining, from the current touch operation information according to the current touch operation information and the attribute information of the operation area, touch data reported to an application processor, and reporting the data.

In a first possible implementation manner of the first aspect, the determining, from the current touch operation information according to the current touch operation information and the attribute information of the operation area, touch data reported to an application processor, and reporting the data includes:
determining, by using the touch operation information to which the operation area can respond, whether the current touch operation information can be responded to by the operation area;
determining, by using the current touch operation information, an operation type of the current touch operation information when the current touch operation information can be responded to by the operation area; and
configuring a preset quantity of reported points for the current touch operation information when the operation type of the current touch operation information is a touch-tap type, determining, from the current touch operation information according to the preset quantity of reported points, the touch data reported to the application processor, and reporting the data; or
determining a report rate of the current touch operation information according to the rate type of the area reported point of the operation area when the operation type of the current touch operation information is a consecutive type, determining, from the current touch operation information according to the determined report rate, the touch data reported to the application processor, and reporting the data.

With reference to the first possible implementation manner of the first aspect, in a second possible implementation manner of the first aspect, the determining, by using the current touch operation information, an operation type of the current touch operation information when the current touch operation information can be responded to by the operation area includes:
acquiring a coordinate set of the current touch operation information when the current touch operation information can be responded to by the operation area, where the coordinate set includes at least two location coordinates of the current touch operation information;
determining whether the coordinate set is within a preset range; and
if the coordinate set is within the preset range, determining that the operation type of the current touch operation information is the touch-tap type; or
if the coordinate set is not within the preset range, determining that the operation type of the current touch operation information is the consecutive type.

With reference to the first possible implementation manner of the first aspect, in a third possible implementation manner of the first aspect, the determining, by using the current touch operation information, an operation type of the current touch operation information when the current touch operation information can be responded to by the operation area includes:
determining a touch speed of the current touch operation information when the current touch operation information can be responded to by the operation area;
determining whether the touch speed of the current touch operation information is less than a set speed value; and
if the touch speed of the current touch operation information is less than the set speed value, determining that the type of the current touch operation information is the touch-tap type; or
if the touch speed of the current touch operation information is greater than or equal to the set speed value, determining that the type of the current touch operation information is the consecutive type.

With reference to the first possible implementation manner of the first aspect, in a fourth possible implementation manner of the first aspect, the configuring a preset quantity of reported points for the current touch operation information when the operation type of the current touch operation information is a touch-tap type, determining, from the current touch operation information according to the preset quantity of reported points, the touch data reported to the application processor, and reporting the data includes:
configuring a preset quantity of reported points for the current touch operation information when the operation type of the current touch operation information is the touch-tap type, where the preset quantity of reported points is 2; and
determining, from the current touch operation information according to the preset quantity 2 of reported points, that the touch data reported to the application processor is start touch data and end touch data, and reporting the start touch data and the end touch data.

With reference to the fourth possible implementation manner of the first aspect, in a fifth possible implementation manner of the first aspect, the reporting the start touch data and the end touch data is specifically as follows:
determining whether a touch time of a current touch operation of the touch-tap type is greater than preset duration; and
if the touch time of the current touch operation of the touch-tap type is greater than the preset duration, reporting the start touch data first, and when the touch operation of the touch-tap type ends, reporting the end touch data; or
if the touch time of the current touch operation of the touch-tap type is less than or equal to the preset duration, reporting the start touch data and the end touch data simultaneously.

With reference to the first possible implementation manner of the first aspect, in a sixth possible implementation manner of the first aspect, a report rate corresponding to a high-speed point reporting area and a report rate corresponding to a low-speed point reporting area are preset, where the report rate corresponding to the high-speed point reporting area is greater than the report rate corresponding to the low-speed point reporting area; and the determining a report rate of the current touch operation information according to the rate type of the area reported point of the operation area includes:
determining, according to the rate type of the area reported point of the operation area, whether the operation area is the high-speed point reporting area or the low-speed point reporting area; and
when the operation area is the high-speed point reporting area, determining the report rate corresponding to the high-speed point reporting area as the report rate of the current touch operation information; or
when the operation area is the low-speed point reporting area, determining the report rate corresponding to the low-speed point reporting area as the report rate of the current touch operation information.

With reference to the first possible implementation manner of the first aspect, in a seventh possible implementation manner of the first aspect, the attribute information of the operation area further includes an original report rate of the operation area, and
the determining a report rate of the current touch operation information according to the rate type of the area reported point of the operation area includes:
determining, according to the rate type of the area reported point of the operation area, whether the operation area is a high-speed point reporting area or a low-speed point reporting area; and
when the operation area is the high-speed point reporting area, determining the original report rate of the operation area as the report rate of the current touch operation information, or adjusting the original report rate of the operation area according to a preset report rate adjustment rule, so that a report rate obtained by means of adjustment is greater than the original report rate of the operation area, and determining the report rate obtained by means of adjustment as the report rate of the current touch operation information; or
when the operation area is the low-speed point reporting area, adjusting the original report rate of the operation area according to a preset report rate adjustment rule, so that a report rate obtained by means of adjustment is less than the original report rate of the operation area, and determining the report rate obtained by means of adjustment as the report rate of the current touch operation information.

With reference to the first possible implementation manner of the first aspect, in an eighth possible implementation manner of the first aspect, the data reporting method further includes:
when the current touch operation information cannot be responded to by the operation area, skipping reporting the current touch operation information.

According to a second aspect, a data reporting apparatus is provided, including:
a receiving unit, adapted to receive current touch operation information;
a processing unit, adapted to determine, by using the current touch operation information received by the receiving unit, an area that is on a current interface of a touchscreen and in which the current touch operation information is located, and use the area as an operation area; determine attribute information of the operation area based on a correspondence between an area and attribute information; and determine, from the current touch operation information according to the current touch operation information and the attribute information of the operation area, touch data reported to an application processor, where the attribute information of the operation area includes a rate type of an area reported point of the operation area and touch operation information to which the operation area can respond; and
a sending unit, adapted to report the touch data determined by the processing unit to the application processor.

In a first possible implementation manner of the second aspect, the processing unit includes:
an information responding determining subunit, adapted to determine, by using the touch operation information to which the operation area can respond, whether the current touch operation information can be responded to by the operation area;
an operation type determining subunit, adapted to determine, by using the current touch operation information, an operation type of the current touch operation information when the information responding determining subunit determines that the current touch operation information can be responded to by the operation area; and
a reported data determining subunit, adapted to configure a preset quantity of reported points for the current touch operation information when the operation type determining subunit determines that the operation type of the current touch operation information is a touch-tap type, and determine, from the current touch operation information according to the preset quantity of reported points, the touch data reported to the application processor; or determine a report rate of the current touch operation information according to the rate type of the area reported point of the operation area when the operation type determining subunit determines that the operation type of the current touch operation information is a consecutive type, and determine, from the current touch operation information according to the determined report rate, the touch data reported to the application processor.

With reference to the first possible implementation manner of the second aspect, in a second possible implementation manner of the second aspect, the operation type determining subunit includes:
an acquiring module, adapted to acquire a coordinate set of the current touch operation information when the current touch operation information can be responded to by the operation area;
a first judging module, adapted to determine whether the coordinate set acquired by the acquiring module is within a preset range; and
a first operation type determining module, adapted to: when the first judging module determines that the coordinate set is within the preset range, determine that the operation type of the current touch operation information is the touch-tap type; or when the first judging module determines that the coordinate set is not within the preset range, determine that the operation type of the current touch operation information is the consecutive type, where the coordinate set includes at least two location coordinates of the current touch operation information.

With reference to the first possible implementation manner of the second aspect, in a third possible implementation manner of the second aspect, the operation type determining subunit includes:
a determining module, adapted to determine a touch speed of the current touch operation information when the current touch operation information can be responded to by the operation area;
a second judging module, adapted to determine whether the touch speed that is of the current touch operation information and that is determined by the determining module is less than a set speed value; and
a second operation type determining module, adapted to: when the second judging module determines that the touch speed of the current touch operation information is less than the set speed value, determine that the type of the current touch operation information is the touch-tap type; or when the second judging module determines that the touch speed of the current touch operation information is greater than or equal to the set speed value, determine that the type of the current touch operation information is the consecutive type.

With reference to the first possible implementation manner of the second aspect, in a fourth possible implementation manner of the second aspect, the reported data determining subunit includes:
a configuring module, adapted to configure the preset quantity of reported points for the current touch operation information when the operation type of the current touch operation information is the touch-tap type, where the preset quantity of reported points is 2; and
a reported data determining module, adapted to determine, from the current touch operation information according to the preset quantity 2 that is of reported points and is configured by the configuring module, that the touch data reported to the application processor is start touch data and end touch data.

With reference to the fourth possible implementation manner of the second aspect, in a fifth possible implementation manner of the second aspect, the reported data determining module includes:
a judging sub-module, adapted to: when it is determined that the two-point reported information is the start touch data and the end touch data, determine whether a touch time of a current touch operation of the touch-tap type is greater than preset duration; where
the sending unit is specifically adapted to: when the judging sub-module determines that the touch time of the current touch operation of the touch-tap type is greater than the preset duration, report the start touch data first, and when the touch operation of the touch-tap type ends, report the end touch data; or when the judging sub-module determines that the touch time of the current touch operation of the touch-tap type is less than or equal to the preset duration, report the start touch data and the end touch data simultaneously.

With reference to the first possible implementation manner of the second aspect, in a sixth possible implementation manner of the second aspect, a report rate corresponding to a high-speed point reporting area and a report rate corresponding to a low-speed point reporting area are preset, where the report rate corresponding to the high-speed point reporting area is greater than the report rate corresponding to the low-speed point reporting area; and
the reported data determining subunit includes:
a first area determining module, adapted to determine, according to the rate type of the area reported point of the operation area, whether the operation area is the high-speed point reporting area or the low-speed point reporting area; and
a first report rate determining module, adapted to: when the first area determining module determines that the operation area is the high-speed point reporting area, determine the report rate corresponding to the high-speed point reporting area as the report rate of the current touch operation information; or when the first area determining module determines that the operation area is the low-speed point reporting area, determine the report rate corresponding to the low-speed point reporting area as the report rate of the current touch operation information.

With reference to the first possible implementation manner of the second aspect, in a seventh possible implementation manner of the second aspect, the attribute information of the operation area further includes an original report rate of the operation area, and
the reported data determining subunit includes:
a second area determining module, adapted to determine, according to the rate type of the area reported point of the operation area, whether the operation area is a high-speed point reporting area or a low-speed point reporting area; and
a second report rate determining module, adapted to: when the second area determining module determines that the operation area is the high-speed point reporting area, determine the original report rate of the operation area as the report rate of the current touch operation information, or adjust the original report rate of the operation area according to a preset report rate adjustment rule, so that a report rate obtained by means of adjustment is greater than the original report rate of the operation area, and determine the report rate obtained by means of adjustment as the report rate of the current touch operation information; or when the second area determining module determines that the operation area is the low-speed point reporting area, adjust the original report rate of the operation area according to a preset report rate adjustment rule, so that a report rate obtained by means of adjustment is less than the original report rate of the operation area, and determine the report rate obtained by means of adjustment as the report rate of the current touch operation information.

With reference to the first possible implementation manner of the second aspect, in an eighth possible implementation manner of the second aspect, the processing unit is further adapted to: when the current touch operation information cannot be responded to by the operation area, skip reporting the current touch operation information.

According to a third aspect, a terminal device is provided, including a memory, a microprocessor connected to the memory by using a bus, and an application processor connected to the microprocessor by using a bus, where
the memory is adapted to store a data reporting program;
the microprocessor is adapted to invoke the data reporting program stored by the memory to execute the following operations:
determining, by using the current touch operation information, an area that is on a current interface of a touchscreen and in which the current touch operation information is located, and using the area as an operation area;
determining attribute information of the operation area based on a correspondence between an area and attribute information, where the attribute information of the operation area includes a rate type of an area reported point of the operation area and touch operation information to which the operation area can respond; and
determining, from the current touch operation information according to the current touch operation information and the attribute information of the operation area, touch data reported to the application processor, and reporting the data; and
the application processor is adapted to receive the data reported by the microprocessor.

In a first possible implementation manner of the third aspect, that the microprocessor is adapted to determine, from the current touch operation information according to the current touch operation information and the attribute information of the operation area, touch data reported to the application processor, and report the data includes:
determining, by using the touch operation information to which the operation area can respond, whether the current touch operation information can be responded to by the operation area;
determining, by using the current touch operation information, an operation type of the current touch operation information when the current touch operation information can be responded to by the operation area; and
configuring a preset quantity of reported points for the current touch operation information when the operation type of the current touch operation information is a touch-tap type, determining, from the current touch operation information according to the preset quantity of reported points, the touch data reported to the application processor, and reporting the data; or
determining a report rate of the current touch operation information according to the rate type of the area reported point of the operation area when the operation type of the current touch operation information is a consecutive type, determining, from the current touch operation information according to the determined report rate, the touch data reported to the application processor, and reporting the data.

With reference to the first possible implementation manner of the third aspect, in a second possible implementation manner of the third aspect, that the microprocessor is adapted to determine, by using the current touch operation information, an operation type of the current touch operation information when the current touch operation information can be responded to by the operation area includes:
acquiring a coordinate set of the current touch operation information when the current touch operation information can be responded to by the operation area, where the coordinate set includes at least two location coordinates of the current touch operation information;
determining whether the coordinate set is within a preset range; and
if the coordinate set is within the preset range, determining that the operation type of the current touch operation information is the touch-tap type; or if the coordinate set is not within the preset range, determining that the operation type of the current touch operation information is the consecutive type.

With reference to the first possible implementation manner of the third aspect, in a third possible implementation manner of the third aspect, that the microprocessor is adapted to determine, by using the current touch operation information, an operation type of the current touch operation information when the current touch operation information can be responded to by the operation area includes:
determining a touch speed of the current touch operation information when the current touch operation information can be responded to by the operation area;
determining whether the touch speed of the current touch operation information is less than a set speed value; and
if the touch speed of the current touch operation information is less than the set speed value, determining that the type of the current touch operation information is the touch-tap type; or if the touch speed of the current touch operation information is greater than or equal to the set speed value, determining that the type of the current touch operation information is the consecutive type.

With reference to the first possible implementation manner of the third aspect, in a fourth possible implementation manner of the third aspect, that the microprocessor is adapted to configure a preset quantity of reported points for the current touch operation information when the operation type of the current touch operation information is a touch-tap type, determine, from the current touch operation information according to the preset quantity of reported points, the touch data reported to the application processor, and report the data includes:
configuring a preset quantity of reported points for the current touch operation information when the operation type of the current touch operation information is the touch-tap type, where the preset quantity of reported points is 2; and
determining, from the current touch operation information according to the preset quantity 2 of reported points, that the touch data reported to the application processor is start touch data and end touch data, and reporting the start touch data and the end touch data.

With reference to the fourth possible implementation manner of the third aspect, in a fifth possible implementation manner of the third aspect, that the microprocessor is adapted to report the start touch data and the end touch data includes:
determining whether a touch time of a current touch operation of the touch-tap type is greater than preset duration; and
if the touch time of the current touch operation of the touch-tap type is greater than the preset duration, reporting the start touch data first, and when the touch operation of the touch-tap type ends, reporting the end touch data; or if the touch time of the current touch operation of the touch-tap type is less than or equal to the preset duration, reporting the start touch data and the end touch data simultaneously.

With reference to the first possible implementation manner of the third aspect, in a sixth possible implementation manner of the third aspect, a report rate corresponding to a high-speed point reporting area and a report rate corresponding to a low-speed point reporting area are preset, where the report rate corresponding to the high-speed point reporting area is greater than the report rate corresponding to the low-speed point reporting area; and
that the microprocessor is adapted to determine a report rate of the current touch operation information according to the rate type of the area reported point of the operation area includes:
determining, according to the rate type of the area reported point of the operation area, whether the operation area is the high-speed point reporting area or the low-speed point reporting area; and when the operation area is the high-speed point reporting area, determining the report rate corresponding to the high-speed point reporting area as the report rate of the current touch operation information; or when the operation area is the low-speed point reporting area, determining the report rate corresponding to the low-speed point reporting area as the report rate of the current touch operation information.

With reference to the first possible implementation manner of the third aspect, in a seventh possible implementation manner of the third aspect, the attribute information of the operation area further includes an original report rate of the operation area, and
that the microprocessor is adapted to determine a report rate of the current touch operation information according to the rate type of the area reported point of the operation area includes:
determining, according to the rate type of the area reported point of the operation area, whether the operation area is a high-speed point reporting area or a low-speed point reporting area; and when the operation area is the high-speed point reporting area, determining the original report rate of the operation area as the report rate of the current touch operation information, or adjusting the original report rate of the operation area according to a preset report rate adjustment rule, so that a report rate obtained by means of adjustment is greater than the original report rate of the operation area, and determining the report rate obtained by means of adjustment as the report rate of the current touch operation information; or when the operation area is the low-speed point reporting area, adjusting the original report rate of the operation area according to a preset report rate adjustment rule, so that a report rate obtained by means of adjustment is less than the original report rate of the operation area, and determining the report rate obtained by means of adjustment as the report rate of the current touch operation information.

With reference to the first possible implementation manner of the third aspect, in an eighth possible implementation manner of the third aspect, the microprocessor is further adapted to: when the current touch operation information cannot be responded to by the operation area, skip reporting the current touch operation information.

The foregoing technical solutions have the following beneficial effects:

An interface of a touchscreen generally includes multiple areas, such as a key area and a handwriting area. When a user performs a touch operation in different areas, different data report rates may be required in different operation areas. For example, a relatively low report rate is required in the key area, and a relatively high report rate is required in a drawing area, the handwriting area, and the like. From this point of view, according to the data reporting method and apparatus, and the terminal device that are provided in the embodiments of the present invention, attribute information corresponding to each area on a current interface of a touchscreen is acquired in advance. After touch operation information is received, in order to determine reported data, an area in which the touch operation information is located needs to be determined first; and after the area in which the touch operation information is located is determined, reported touch data may be further determined according to attribute information corresponding to the determined area. According to the method provided in the present invention, reported touch data may be determined according to attribute information of an area in which current touch operation information is located and the current touch operation information, so that areas that have different data reporting requirements report touch data by using different report rates. Compared with that a touchscreen always reports touch data according to a highest report rate in the prior art, according to the data reporting method and apparatus, and the terminal device that are provided in the embodiments, a quantity of interrupts is reduced for an application processor, and usage of the application processor is decreased, and correspondingly, power consumption generated when the application processor processes a touchscreen interrupt event is reduced.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some embodiments of this application, and a person of ordinary skill in the art may still derive other drawings from the provided accompanying drawings without creative efforts.
FIG. 1 is a schematic flowchart of a data reporting method according to an embodiment of the present invention;
FIG. 2 is a schematic flowchart of a data reporting method according to another embodiment of the present invention;
FIG. 3 is a schematic flowchart of a data reporting method according to another embodiment of the present invention;
FIG. 4 is a schematic flowchart of a data reporting method according to another embodiment of the present invention;
FIG. 5 is a schematic flowchart of a data reporting method according to another embodiment of the present invention;
FIG. 6 is a schematic flowchart of a data reporting method according to another embodiment of the present invention;
FIG. 7 is a schematic flowchart of a data reporting method according to another embodiment of the present invention;
FIG. 8 is a schematic structural diagram of a data reporting apparatus 80 according to an embodiment of the present invention;
FIG. 9 is a schematic structural diagram of a processing unit 802 of a data reporting apparatus according to another embodiment of the present invention;
FIG. 10 is a schematic structural diagram of an operation type determining subunit 902 of a data reporting apparatus according to another embodiment of the present invention;
FIG. 11 is a schematic structural diagram of a reported data determining subunit 903 of a data reporting apparatus according to another embodiment of the present invention; and
FIG. 12 is a schematic structural diagram of a terminal device 120 according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the present invention, an involved method may be applied to a terminal device that has a touchscreen. The terminal device may be a smartphone, a tablet PAD, a terminal device that has a touchscreen and implements an equivalent function, or the like.

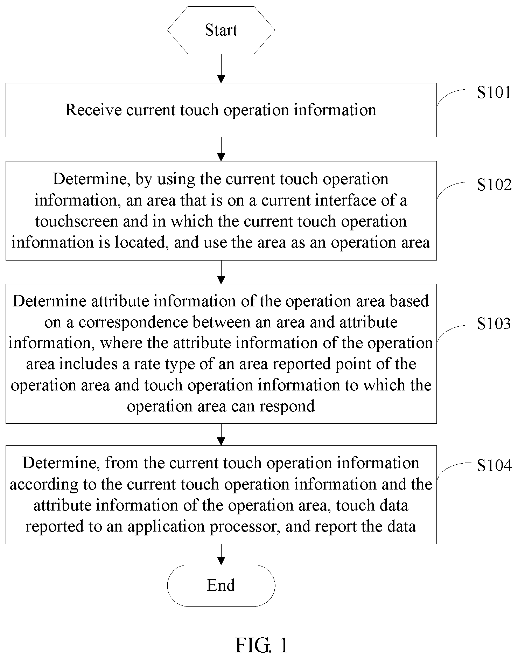

Referring to FIG. 1, FIG. 1 is a schematic flowchart of a data reporting method according to an embodiment of the present invention. A correspondence between an area and attribute information is acquired in advance, and the method may include:
Step S101: Receive current touch operation information.

When a user performs a touch input operation on a touchscreen, a touchscreen system detects current touch operation information, and receives the current touch operation information.

Step S102: Determine, by using the current touch operation information, an area that is on a current interface of a touchscreen and in which the current touch operation information is located, and use the area as an operation area.

In a possible implementation manner, the current touch operation information may include touch location information, where the touch location information can indicate a location, of the current touch operation information, on the current interface of the touchscreen. Because the current interface of the touchscreen includes multiple areas, location information of each area on the current interface of the touchscreen may be acquired in advance. Matching is performed on the touch location information in the received current touch operation information and the location information of each area to determine an area that is on the current interface of the touchscreen and to which the touch location information belongs, where the area to which the touch location information belongs is the operation area.

Step S103: Determine attribute information of the operation area based on the correspondence between an area and attribute information.

The attribute information of the operation area includes a rate type of an area reported point of the operation area and touch operation information to which the operation area can respond. Specifically, the rate type of the area reported point of the operation area may be used to indicate whether the operation area is a high-speed point reporting area or a low-speed point reporting area. The touch operation information to which the operation area can respond may be used to indicate a touch operation to which the operation area can respond.

Exemplarily, it is assumed that an area on the current interface of the touchscreen includes at least a first area and a second area, where the first area is a low-speed point reporting area, and the second area is a high-speed point reporting area. Attribute information corresponding to the first area is as follows: a rate type of an area reported point is a low speed, and touch operation information that can be responded to includes la, lb, and 1c; attribute information corresponding to the second area is as follows: a rate type of an area reported point is a high speed, and touch operation information that can be responded to includes ha, hb, and hc. Assuming that it is determined, by using the touch location information in the current touch operation information, that the operation area is the first area, the attribute information of the operation area is the attribute information corresponding to the first area, that is, the rate type of the area reported point is the low speed, and the touch operation information that can be responded to includes la, lb, and lc.

Step S104: Determine, from the current touch operation information according to the current touch operation information and the attribute information of the operation area, touch data reported to an application processor, and report the data.

The attribute information of the operation area includes the rate type of the area reported point and the touch operation information to which the operation area can respond. Whether the current touch operation information can be responded to by the operation area may be determined by using the touch operation information, in the attribute information, to which the operation area can respond. When the current touch operation information can be responded to by the operation area, the reported touch data may be determined according to an operation type of the current touch operation information and the rate type of the area reported point. For example, when the operation type of the current touch operation information is a touch-tap type, the reported data is start touch data and end touch data; when the operation type of the current touch operation information is a sliding type, the reported touch data is determined according to a report rate corresponding to the rate type of the area reported point.

An interface of a touchscreen generally includes multiple areas, such as a key area and a handwriting area. Different areas have different data reporting requirements. For example, a relatively low report rate is required in the key area, and a relatively high report rate is required in a drawing area, the handwriting area, and the like. From this point of view, according to the data reporting method provided in this embodiment of the present invention, attribute information corresponding to each area on a current interface of a touchscreen is acquired in advance. After touch operation information is received, in order to determine reported data, an area in which the touch operation information is located needs to be determined first; and after the area in which the touch operation information is located is determined, reported touch data may be further determined according to attribute information corresponding to the determined area and reported. According to the method provided in this embodiment of the present invention, reported touch data may be determined according to attribute information of an area in which current touch operation information is located and the current touch operation information, so that areas that have different data reporting requirements report touch data by using different report rates. Compared with that a touchscreen always reports touch data according to a highest report rate in the prior art, according to the data reporting method provided in this embodiment of the present invention, a quantity of interrupts is reduced for an application processor, and usage of the application processor is decreased, thereby reducing power consumption generated when the application processor processes a touchscreen interrupt event.

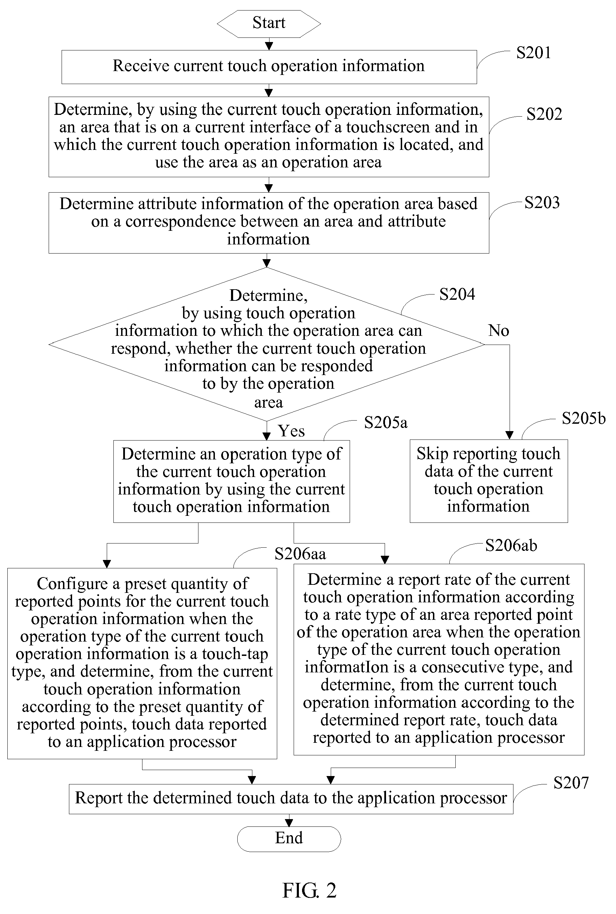

Referring to FIG. 2, FIG. 2 is a schematic flowchart of another data reporting method according to an embodiment of the present invention. A correspondence between an area and attribute information is acquired in advance, and the method may include:
Step S201: Receive current touch operation information.

When a user performs a touch input operation on a touchscreen, a touchscreen system detects current touch operation information, and receives the current touch operation information.

Step S202: Determine, by using the current touch operation information, an area that is on a current interface of a touchscreen and in which the current touch operation information is located, and use the area as an operation area.

In a possible implementation manner, the current touch operation information may include touch location information, where the touch location information can indicate a location, of the current touch operation information, on the current interface of the touchscreen. Because the current interface of the touchscreen includes multiple areas, location information of each area on the current interface of the touchscreen may be acquired in advance. Matching is performed on the touch location information in the received current touch operation information and the location information of each area to determine an area that is on the current interface of the touchscreen and to which the touch location information belongs, where the area to which the touch location information belongs is the operation area.

Step S203: Determine attribute information of the operation area based on the correspondence between an area and attribute information.

The attribute information of the operation area includes a rate type of an area reported point of the operation area and touch operation information to which the operation area can respond. Further, the rate type of the area reported point of the operation area may be used to indicate whether the operation area is a high-speed point reporting area or a low-speed point reporting area. The touch operation information to which the operation area can respond may be used to indicate a touch operation to which the operation area can respond.

Exemplarily, it is assumed that an area on the current interface of the touchscreen includes at least a first area and a second area, where the first area is a low-speed point reporting area, and the second area is a high-speed point reporting area. Attribute information corresponding to the first area is as follows: a rate type of an area reported point is a low speed, and touch operation information that can be responded to includes la, lb, and 1c; attribute information corresponding to the second area is as follows: a rate type of an area reported point is a high speed, and touch operation information that can be responded to includes ha, hb, and hc. Assuming that it is determined, by using the touch location information in the current touch operation information, that the operation area is the first area, the attribute information of the operation area is the attribute information corresponding to the first area, that is, the rate type of the area reported point is the low speed, and the touch operation information that can be responded to includes la, lb, and lc.

Step S204: Determine, by using touch operation information to which the operation area can respond, whether the current touch operation information can be responded to by the operation area.

The determining, by using touch operation information to which the operation area can respond, whether the current touch operation information can be responded to by the operation area may include: determining whether the current touch operation information can be matched with the touch operation information to which the operation area can respond; and if the current touch operation information can be matched with the touch operation information to which the operation area can respond, determining that the current touch operation information can be responded to by the operation area, that is, the current touch operation information is valid touch operation information; otherwise, determining that the current touch operation information cannot be responded to by the operation area, that is, the current touch operation information is invalid touch operation information.

For example, the touch operation information to which the operation area can respond includes: "Δ", "∟", "√", and "∠". When the user enters "√" in the operation area, matching is performed on "√" and the touch operation information "Δ", "∟", "√", and "∠" to which the operation area can respond. Because touch operation information that matches "√" exists in the touch operation information to which the operation area can respond, it is determined that the current touch operation information can be responded to by the operation area. If the user enters "U" in the operation area, because no touch operation information that matches "U" exists in the touch operation information to which the operation area can respond, it is determined that the current touch operation information cannot be responded to by the operation area.

Step S205a: Determine, by using the current touch operation information, an operation type of the current touch operation information when the current touch operation information can be responded to by the operation area.

The operation type of the current touch operation information may include a touch-tap type, such as a tapping operation, and a consecutive type, such as a sliding operation.

Step S206aa: Configure a preset quantity of reported points for the current touch operation information when the operation type of the current touch operation information is a touch-tap type, and determine, from the current touch operation information according to the preset quantity of reported points, touch data reported to an application processor.

In a possible implementation manner, the configuring a preset quantity of reported points for the current touch operation information when the operation type of the current touch operation information is a touch-tap type, and determining, from the current touch operation information according to the preset quantity of reported points, touch data reported to an application processor is specifically as follows: configuring a preset quantity of reported points for the current touch operation information when the operation type of the current touch operation information is the touch-tap type, where the preset quantity of reported points is 2; and determining, from the current touch operation information according to the preset quantity 2 of reported points, that the touch data reported to the application processor is start touch data and end touch data.

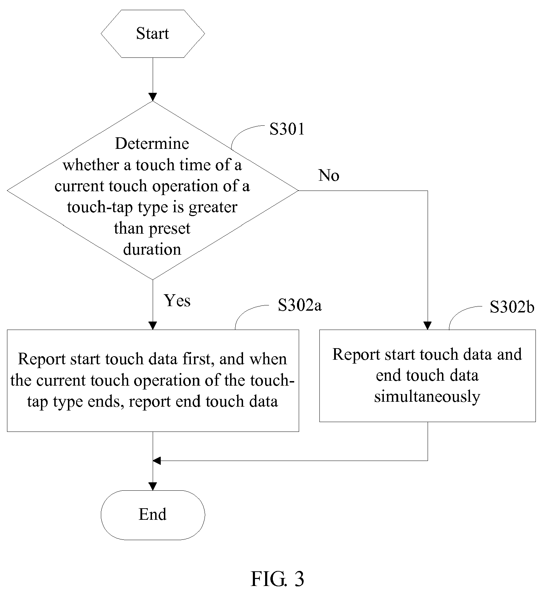

When a current touch operation is a touch operation of the touch-tap type, such as a tapping operation, considering that a tapping operation includes a long-time tapping operation and a short-time tapping operation, different data reporting manners are used for different tapping operations in this embodiment. FIG. 3 shows a schematic flowchart of a possible implementation manner of reporting start touch data and end touch data to an application processor when an operation type of current touch operation information is a touch-tap type in a data reporting method provided in an embodiment, and the implementation manner may include:
Step S301: Determine whether a touch time of a current touch operation of a touch-tap type is greater than preset duration.

Step S302a: If the touch time of the current touch operation of the touch-tap type is greater than the preset duration, report start touch data first, and when the current touch operation of the touch-tap type ends, report end touch data.

The start touch data corresponds to a tap-down operation of the current touch operation of the touch-tap type, and the end touch data corresponds to a lift-up operation.

A touch operation performed by the user on the touchscreen is generally a touch operation of the touch-tap type, and for the touch operation of the touch-tap type, only the start touch data corresponding to the tap-down operation and the end touch data corresponding to the lift-up operation are reported. Therefore, not only a quantity of interrupts processed by an application processor is greatly reduced, which significantly reduces power consumption of the application processor, but also a running speed of an application program is remarkably improved.

Step S302b: If the touch time of the current touch operation of the touch-tap type is less than or equal to the preset duration, report start touch data and end touch data simultaneously.

The foregoing steps provide a data reporting manner used when the operation type of the current touch operation information is a touch-tap type, and the following provides a data reporting manner used when the operation type of the current touch operation information is a consecutive type.

Step S206ab: Determine a report rate of the current touch operation information according to a rate type of an area reported point of the operation area when the operation type of the current touch operation information is a consecutive type, and determine, from the current touch operation information according to the determined report rate, touch data reported to an application processor.

In this embodiment, each area on the current interface is classified into at least two types of areas, where one is a high-speed point reporting area, and another one is a low-speed point reporting area. The high-speed point reporting area may be but is not limited to a handwriting area, a drawing area, and the like, and the low-speed point reporting area may be but is not limited to an icon area set for responding to a sliding operation, and the like. The high-speed point reporting area corresponds to a relatively high report rate, which may enable a written word or a drawn line to be smoother and more coherent. The low-speed point reporting area corresponds to a relatively low report rate, which may ensure that, on the premise that a touch operation can be properly responded to, a quantity of interrupts is reduced for the application processor, thereby reducing power consumption of the application processor.

Step S207: Report the determined touch data to the application processor.

The foregoing steps provide a data reporting manner used when the operation area can respond to the current touch operation information, and the following provides a data processing manner used when the operation area cannot respond to the current touch operation information.

Step S205b: When the current touch operation information cannot be responded to by the operation area, skip reporting the current touch operation information.

In the prior art, when current touch operation information cannot be responded to by an operation area, that is, when the current touch operation information is invalid touch operation information, a touchscreen system still reports touch data of the current touch operation information, and interrupts an application processor to perform data processing. In order to further reduce a quantity of interrupts for an application processor and reduce power consumption of the application processor, according to the method provided in this embodiment, when it is determined that current touch operation information cannot be responded to by an operation area, touch data of the current touch operation information is not reported.

According to the data reporting method provided in this embodiment of the present invention, after current touch operation information is received, an area in which the current touch operation information is located is determined as an operation area. Because the current touch operation information can be responded to by the operation area, or cannot be responded to by the operation area, whether the current touch operation information can be responded to by the operation area needs to be determined first. When the current touch operation information cannot be responded to by the operation area, in order to reduce a quantity of interrupts for an application processor so as to reduce power consumption of the application processor, touch data of the current touch operation information is not reported. When the current touch operation information can be responded to by the operation area, because a touch operation may be classified into a touch operation of a touch-tap type and a touch operation of a consecutive type, and touch operations of different operation types require different quantities of points for reporting touch data, if the current touch operation information can be responded to by the operation area, an operation type of the current touch operation information is determined. When the operation type of the current touch operation information is the touch-tap type, a preset quantity of reported points is configured for the current touch operation information, and the touch data of the current touch operation information is reported according to the preset quantity of reported points. When the operation type of the current touch operation information is the consecutive type, a report rate of the current touch operation information is determined according to a rate type of an area reported point of the operation area, and the touch data of the current touch operation information is reported according to the determined report rate.

According to the method provided in this embodiment of the present invention, a data reporting manner may be determined according to attribute information of an area in which current touch operation information is located and an operation type of the current touch operation information. Specifically, for a touch operation of a touch-tap type, only data of two points, namely start touch data corresponding to a tap-down event and end touch data corresponding to a lift-up event, is reported. For a touch operation of a consecutive type, a report rate is determined according to a rate type of an area reported point of an area in which the touch operation is located, so that a high-speed point reporting area corresponds to a high report rate and a low-speed point reporting area corresponds to a low report rate; and touch data is reported according to the determined report rate. Compared with that a touchscreen always reports touch data according to a highest report rate in the prior art, according to the data reporting method provided in this embodiment, a quantity of interrupts is reduced for an application processor, and usage of the application processor is decreased, thereby reducing power consumption generated when the application processor processes a touchscreen interrupt event.

In any one of the foregoing embodiments, there are multiple implementation manners of determining, by using the current touch operation information, the operation type of the current touch operation information when the current touch operation information can be responded to by the operation area.

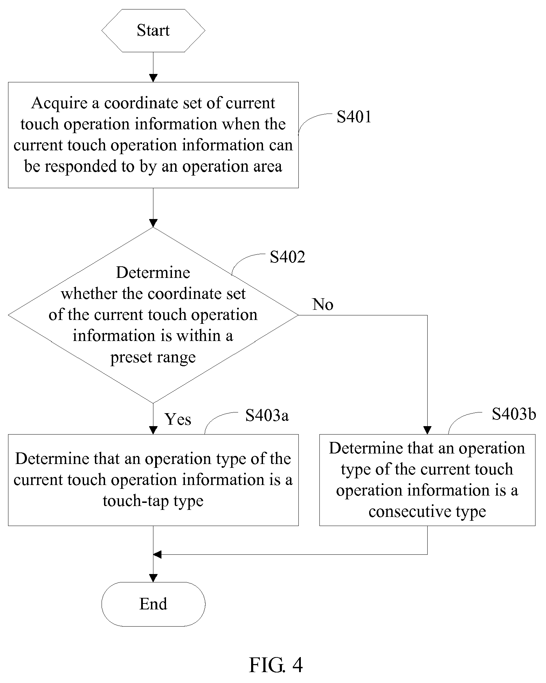

Referring to FIG. 4, FIG. 4 is a schematic flowchart of a possible implementation manner of determining, by using current touch operation information, an operation type of the current touch operation information when the current touch operation information can be responded to by an operation area in a data reporting method provided in an embodiment of the present invention, and an implementation process may include:
Step S401: Acquire a coordinate set of the current touch operation information when the current touch operation information can be responded to by the operation area.

The current touch operation information includes multiple touch location coordinates. The acquiring a coordinate set of the current touch operation information is specifically as follows: acquiring at least two touch location coordinates from the current touch operation information, and using the at least two touch location coordinates as the coordinate set of the current touch operation information.

Step S402: Determine whether the coordinate set of the current touch operation information is within a preset range.

In a possible implementation manner, the determining whether the coordinate set is within a preset range is specifically as follows: calculating a Euclidean distance between any two touch location coordinates in the coordinate set; and if all distances between every two touch location coordinates are less than a preset value, determining that the coordinate set is within the preset range. For example, the coordinate set includes a touch location coordinate a, a touch location coordinate b, and a touch location coordinate c, and a Euclidean distance between the touch location coordinate a and the touch location coordinate b, a Euclidean distance between the touch location coordinate a and the touch location coordinate c, and a Euclidean distance between the touch location coordinate b and the touch location coordinate c are calculated. If all the three Euclidean distances obtained by calculation are less than a set value d, it is determined that the coordinate set is within the preset range.

For a touch operation of the touch-tap type, for example, a tapping operation, when the user performs the tapping operation on the touchscreen with a finger, the finger generally does not move, that is, a location of the finger is unchanged, and correspondingly, a location coordinate of the tapping operation is unchanged. For a touch operation of the consecutive type, for example, a sliding operation, when the user performs the sliding operation on the touchscreen with a finger, the finger moves, that is, a location of the finger changes, and correspondingly, a location coordinate of the sliding operation changes. The operation type of the current touch operation information can be determined by determining whether the coordinate set of the current touch operation information is within the preset range.

Step S403a: If the coordinate set of the current touch operation information is within the preset range, determine that the operation type of the current touch operation information is the touch-tap type.

Step S404b: If the coordinate set of the current touch operation information is not within the preset range, determine that the operation type of the current touch operation information is the consecutive type.

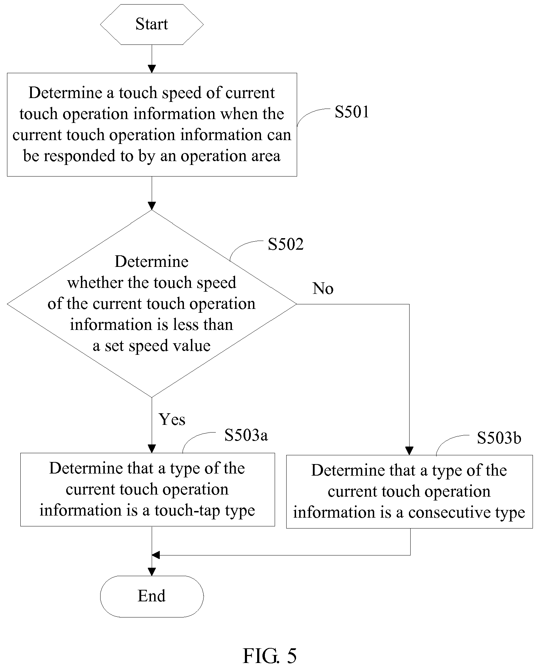

Referring to FIG. 5, FIG. 5 is a schematic flowchart of another implementation manner of determining, by using current touch operation information, an operation type of the current touch operation information when the current touch operation information can be responded to by an operation area in a data reporting method provided in an embodiment of the present invention, and an implementation process may include:
Step S501: Determine a touch speed of the current touch operation information when the current touch operation information can be responded to by the operation area.

Specifically, the touch location information and touch time information of the current touch operation information are acquired, and the touch speed of the current touch operation information is determined by using the touch location information and the touch time information.

Step S502: Determine whether the touch speed of the current touch operation information is less than a set speed value.

A touch operation of the touch-tap type, for example, a tapping operation, is generally a stationary touch operation, and when the user performs the tapping operation on the touchscreen with a finger, the finger generally does not move, that is, a moving speed of the finger is 0. A touch operation of the consecutive type, for example, a sliding operation, moves, and when the user performs the sliding operation on the touchscreen with a finger, the finger moves and has a moving speed. Therefore, the operation type of the current touch operation information can be determined by determining whether the touch speed of the current touch operation information is less than the set speed value.

Step S503a: If the touch speed of the current touch operation information is less than the set speed value, determine that the type of the current touch operation information is the touch-tap type.

Step S503b: If the touch speed of the current touch operation information is greater than or equal to the set speed value, determine that the type of the current touch operation information is the consecutive type.

In any one of the foregoing embodiments, there are multiple implementation manners of determining the report rate of the current touch operation information according to the rate type of the area reported point of the operation area when the operation type of the current touch operation information is the consecutive type, and reporting the touch data of the current touch operation information according to the determined report rate.

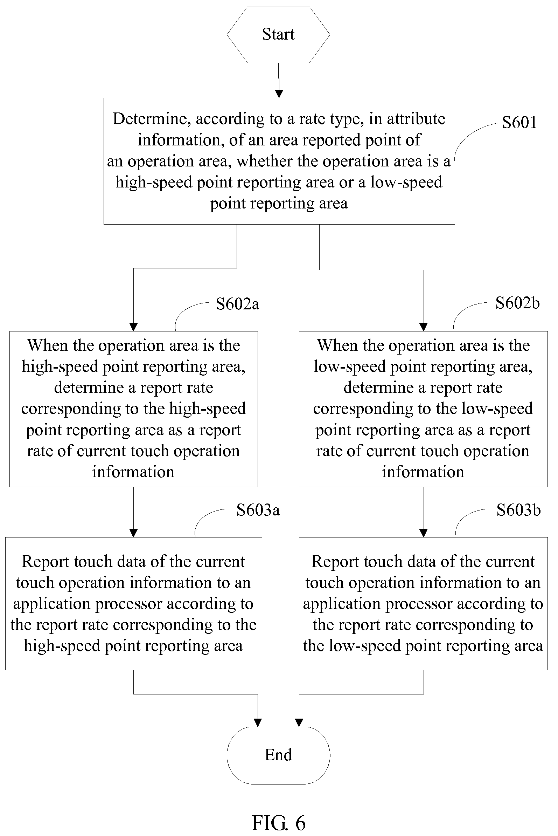

Referring to FIG. 6, FIG. 6 is a schematic flowchart of a possible implementation manner of determining a report rate of current touch operation information according to a rate type, in attribute information, of an area reported point of an operation area when an operation type of the current touch operation information is a consecutive type, and reporting touch data of the current touch operation information according to the determined report rate in a data reporting method provided in an embodiment of the present invention, and an implementation process may include:
Step S601: Determine, according to the rate type, in the attribute information, of the area reported point of the operation area, whether the operation area is a high-speed point reporting area or a low-speed point reporting area.

In this embodiment of the present invention, each area on the current interface of the touchscreen is classified into two types of areas in advance, that is, the high-speed point reporting area and the low-speed point reporting area, and a report rate corresponding to the high-speed point reporting area and a report rate corresponding to the low-speed point reporting area are preset. The report rate corresponding to the high-speed point reporting area is greater than the report rate corresponding to the low-speed point reporting area.

Step S602a: When the rate type, in the attribute information, of the area reported point of the operation area indicates that the operation area is the high-speed point reporting area, determine a report rate corresponding to the high-speed point reporting area as the report rate of the current touch operation information.

Step S603a: Report the touch data of the current touch operation information to the application processor according to the report rate corresponding to the high-speed point reporting area.

The foregoing steps provide a data reporting manner used when the operation area is the high-speed point reporting area, and the following provides a data reporting manner used when the operation area is the low-speed point reporting area.

Step S602b: When the rate type, in the attribute information, of the area reported point of the operation area indicates that the operation area is the low-speed point reporting area, determine a report rate corresponding to the low-speed point reporting area as the report rate of the current touch operation information.

Step S603b: Report the touch data of the current touch operation information to the application processor according to the report rate corresponding to the low-speed point reporting area.

It may be understood that reporting the touch data by using the report rate corresponding to the low-speed point reporting area is essentially to filter out some useless touch data, and report useful touch data. It should be noted that the report rate corresponding to the low-speed point reporting area should meet the following: the reported touch data can be correctly responded to by the operation area.

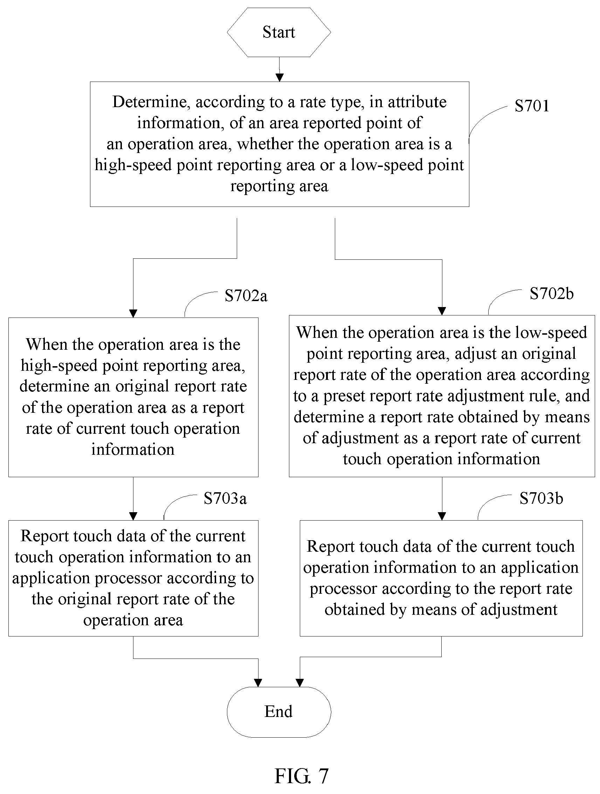

In any one of the foregoing embodiments, the attribute information of each area on the current interface of the touchscreen may further include an original report rate of the area. Correspondingly, the attribute information of the operation area may further include an original report rate of the operation area. In this case, referring to FIG. 7, FIG. 7 is a schematic flowchart of another implementation manner of determining a report rate of current touch operation information according to a rate type, in attribute information, of an area reported point of an operation area when an operation type of the current touch operation information is a consecutive type, and reporting touch data of the current touch operation information according to the determined report rate in a data reporting method provided in an embodiment of the present invention, and an implementation process may include:
Step S701: Determine, according to the rate type, in the attribute information, of the area reported point of the operation area, whether the operation area is a high-speed point reporting area or a low-speed point reporting area.

Step S702a: When the rate type, in the attribute information, of the area reported point of the operation area indicates that the operation area is the high-speed point reporting area, determine the original report rate of the operation area as the report rate of the current touch operation information.

Step S703a: Report the touch data of the current touch operation information to the application processor according to the original report rate of the operation area.

The foregoing steps provide a data reporting manner used when the operation area is the high-speed point reporting area, and the following provides a data reporting manner used when the operation area is the low-speed point reporting area.

Step S702b: When the rate type, in the attribute information, of the area reported point of the operation area indicates that the operation area is the low-speed point reporting area, adjust the original report rate of the operation area according to a preset report rate adjustment rule, so that a report rate obtained by means of adjustment is less than the original report rate of the operation area, and determine the report rate obtained by means of adjustment as the report rate of the current touch operation information.

Step S703b: Report the touch data of the current touch operation information to the application processor according to the report rate obtained by means of adjustment.

The foregoing steps S702a-S703a provide a data reporting manner used when an operation area is a high-speed point reporting area. In addition to this manner, another data reporting manner may also be used. In a possible implementation manner, an original report rate of the operation area is adjusted according to a preset report rate adjustment rule, so that a report rate obtained by means of adjustment is greater than the original report rate of the operation area; the report rate obtained by means of adjustment is determined as a report rate of current touch operation information; and touch data of the current touch operation information is reported according to the report rate obtained by means of adjustment. For example, touch data is interpolated, so that a report rate doubles, and for a handwriting area, a drawing area, and the like, a written word or a drawn line may be smoother and more coherent. For a touch operation of a consecutive type, although a report rate of the high-speed area is improved and a quantity of interrupts is increased for an application processor, because there are few touch operations of the consecutive type in the high-speed point reporting area, and there are more touch operations of a touch-tap type and touch operations that are of the consecutive type and in a low-speed point reporting area, on the whole, by using the data reporting method provided in this embodiment of the present invention, the quantity of interrupts is reduced for the application processor, thereby reducing power consumption of the application processor.

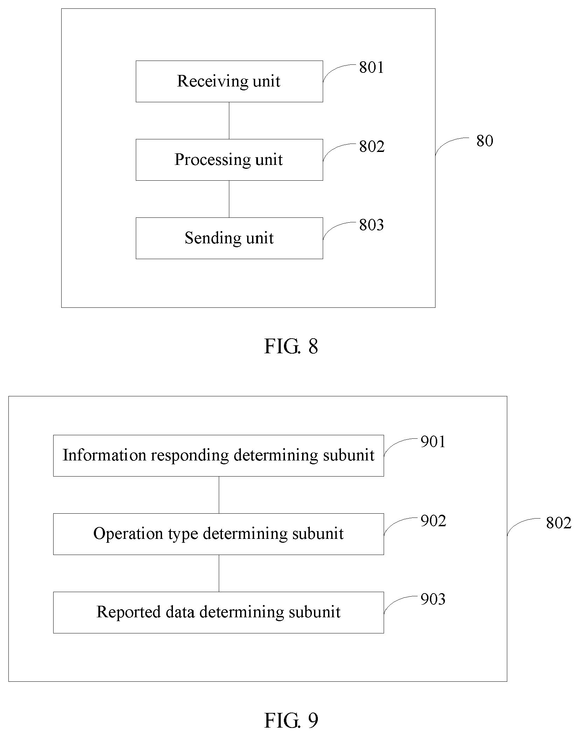

Referring to FIG. 8, FIG. 8 is a schematic structural diagram of a data reporting apparatus 80 according to an embodiment of the present invention. The data reporting apparatus 80 may include a receiving unit 801, a processing unit 802, and a sending unit 803, where
the receiving unit 801 is adapted to receive current touch operation information;
the processing unit 802 is adapted to determine, by using the current touch operation information received by the receiving unit 801, an area that is on a current interface of a touchscreen and in which the current touch operation information is located, and use the area as an operation area; determine attribute information of the operation area based on a correspondence between an area and attribute information; and determine, from the current touch operation information according to the current touch operation information and the attribute information of the operation area, touch data reported to an application processor, where
the attribute information of the operation area includes a rate type of an area reported point of the operation area and touch operation information to which the operation area can respond; and
the sending unit 803 is adapted to report the touch data determined by the processing unit 802 to the application processor.

An interface of a touchscreen generally includes multiple areas, such as a key area and a handwriting area. Different areas have different data reporting requirements. For example, a relatively low report rate is required in the key area, and a relatively high report rate is required in a drawing area, the handwriting area, and the like. From this point of view, the data reporting apparatus provided in this embodiment of the present invention acquires attribute information corresponding to each area on a current interface of a touchscreen in advance; after receiving touch operation information, in order to determine reported data, needs to first determine an area in which the touch operation information is located; and after determining the area in which the touch operation information is located, may further determine reported touch data according to attribute information corresponding to the determined area. The data reporting apparatus provided in this embodiment of the present invention may determine reported touch data according to attribute information of an area in which current touch operation information is located and the current touch operation information, so that areas that have different data reporting requirements report touch data by using different report rates. Compared with that a touchscreen always reports touch data according to a highest report rate in the prior art, according to the data reporting apparatus provided in this embodiment of the present invention, a quantity of interrupts is reduced for an application processor, and usage of the application processor is decreased, and correspondingly, power consumption generated when the application processor processes a touchscreen interrupt event is reduced.

Referring to FIG. 9, FIG. 9 is a schematic structural diagram of a processing unit 802 of a data reporting apparatus 80 according to another embodiment of the present invention, and the processing unit 802 may include an information responding determining subunit 901, an operation type determining subunit 902, and a reported data determining subunit 903, where
the information responding determining subunit 901 is adapted to determine, by using the touch operation information to which the operation area can respond, whether the current touch operation information can be responded to by the operation area;
the operation type determining subunit 902 is adapted to determine, by using the current touch operation information, an operation type of the current touch operation information when the information responding determining subunit 901 determines that the current touch operation information can be responded to by the operation area; and
the reported data determining subunit 903 is adapted to configure a preset quantity of reported points for the current touch operation information when the operation type determining subunit 902 determines that the operation type of the current touch operation information is a touch-tap type, and determine, from the current touch operation information according to the preset quantity of reported points, the touch data reported to the application processor; or determine a report rate of the current touch operation information according to the rate type of the area reported point of the operation area when the operation type determining subunit 902 determines that the operation type of the current touch operation information is a consecutive type, and determine, from the current touch operation information according to the determined report rate, the touch data reported to the application processor.

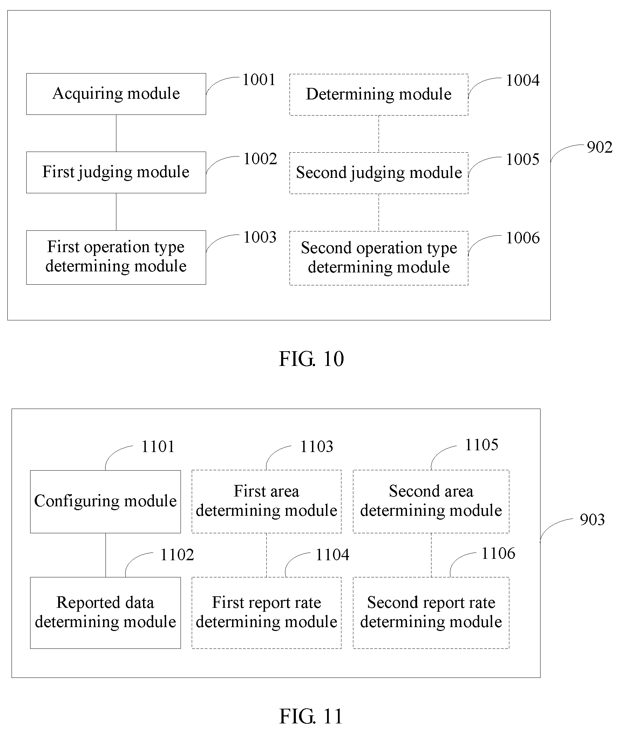

There are multiple manners of determining the operation type of the current touch operation information by using the current touch operation information. FIG. 10 shows a schematic structural diagram of an operation type determining subunit 902 of a processing unit 802 according to another embodiment of the present invention, and the operation type determining subunit 902 may include an acquiring module 1001, a first judging module 1002, and a first operation type determining module 1003, where
the acquiring module 1001 is adapted to acquire a coordinate set of the current touch operation information when the current touch operation information can be responded to by the operation area;
the first judging module 1002 is adapted to determine whether the coordinate set acquired by the acquiring module 1001 is within a preset range; and
the first operation type determining module 1003 is adapted to: when the first judging module 1002 determines that the coordinate set is within the preset range, determine that the operation type of the current touch operation information is the touch-tap type; or when the first judging module 1002 determines that the coordinate set is not within the preset range, determine that the operation type of the current touch operation information is the consecutive type, where the coordinate set includes at least two location coordinates of the current touch operation information.

FIG. 10 further shows another schematic structural diagram of an operation type determining subunit 902 of a processing unit 802 according to another embodiment of the present invention, and the operation type determining subunit 902 may include a determining module 1004, a second judging module 1005, and a second operation type determining module 1006, where
the determining module 1004 is adapted to determine a touch speed of the current touch operation information when the current touch operation information can be responded to by the operation area;
the second judging module 1005 is adapted to determine whether the touch speed that is of the current touch operation information and that is determined by the determining module 1004 is less than a set speed value; and
the second operation type determining module 1006 is adapted to: when the second judging module 1005 determines that the touch speed of the current touch operation information is less than the set speed value, determine that the type of the current touch operation information is the touch-tap type; or when the second judging module 1005 determines that the touch speed of the current touch operation information is greater than or equal to the set speed value, determine that the type of the current touch operation information is the consecutive type.

Referring to FIG. 11, FIG. 11 is a schematic structural diagram of a reported data determining subunit 903 of a processing unit 802 according to another embodiment of the present invention, and the reported data determining subunit 903 may include a configuring module 1101 and a reported data determining module 1102, where
the configuring module 1101 is adapted to configure the preset quantity of reported points for the current touch operation information when the operation type of the current touch operation information is the touch-tap type, where the preset quantity of reported points is 2; and
the reported data determining module 1102 is adapted to determine, from the current touch operation information according to the preset quantity 2 that is of reported points and is configured by the configuring module 1101, that the touch data reported to the application processor is start touch data and end touch data.

Further, the reported data determining module 1102 may include a judging sub-module.

The judging sub-module is adapted to: when it is determined that the two-point reported information is the start touch data and the end touch data, determine whether a touch time of a current touch operation of the touch-tap type is greater than preset duration; and
the sending unit 803 is specifically adapted to: when the judging sub-module determines that the touch time of the current touch operation of the touch-tap type is greater than the preset duration, report the start touch data first, and when the touch operation of the touch-tap type ends, report the end touch data; or when the judging sub-module determines that the touch time of the current touch operation of the touch-tap type is less than or equal to the preset duration, report the start touch data and the end touch data simultaneously.

In the foregoing embodiments, there are multiple implementation manners of determining the report rate of the current touch operation information according to the rate type of the area reported point of the operation area when the operation type determining subunit 902 determines that the operation type of the current touch operation information is the consecutive type. A report rate corresponding to a high-speed point reporting area and a report rate corresponding to a low-speed point reporting area are preset. Referring to FIG. 11, FIG. 11 further shows a schematic structural diagram of a reported data determining subunit 903 of a processing unit 802 according to another embodiment of the present invention, and the reported data determining subunit 903 may include a first area determining module 1103 and a first report rate determining module 1104, where
the first area determining module 1103 is adapted to determine, according to the rate type of the area reported point of the operation area, whether the operation area is the high-speed point reporting area or the low-speed point reporting area; and
the first report rate determining module 1104 is adapted to: when the first area determining module 1103 determines that the operation area is the high-speed point reporting area, determine the report rate corresponding to the high-speed point reporting area as the report rate of the current touch operation information; or when the first area determining module determines that the operation area is the low-speed point reporting area, determine the report rate corresponding to the low-speed point reporting area as the report rate of the current touch operation information.

In another possible implementation manner, the attribute information of the operation area further includes an original report rate of the operation area. Referring to FIG. 11, FIG. 11 further shows another schematic structural diagram of a reported data determining subunit 903 of a processing unit 802 according to another embodiment of the present invention, and the reported data determining subunit 903 may include a second area determining module 1105 and a second report rate determining module 1106, where
the second area determining module 1105 is adapted to determine, according to the rate type of the area reported point of the operation area, whether the operation area is a high-speed point reporting area or a low-speed point reporting area; and
the second report rate determining module 1106 is adapted to: when the second area determining module 1105 determines that the operation area is the high-speed point reporting area, determine the original report rate of the operation area as the report rate of the current touch operation information, or adjust the original report rate of the operation area according to a preset report rate adjustment rule, so that a report rate obtained by means of adjustment is greater than the original report rate of the operation area, and determine the report rate obtained by means of adjustment as the report rate of the current touch operation information; or when the first area determining module determines that the operation area is the low-speed point reporting area, adjust the original report rate of the operation area according to a preset report rate adjustment rule, so that a report rate obtained by means of adjustment is less than the original report rate of the operation area, and determine the report rate obtained by means of adjustment as the report rate of the current touch operation information.

Optionally, the processing unit 802 in the foregoing embodiments is further adapted to: when the current touch operation information cannot be responded to by the operation area, skip reporting the current touch operation information.

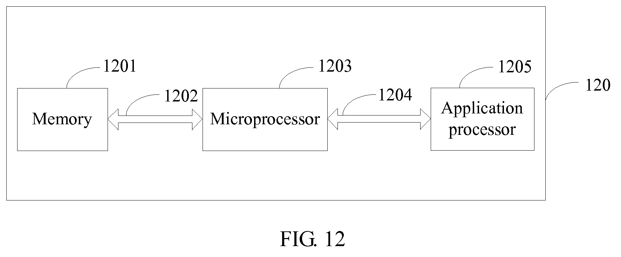

It may be learned from the foregoing descriptions that a person skilled in the art may clearly understand that the present application may be implemented by using software plus a necessary universal hardware platform. Therefore, referring to FIG. 12, an embodiment of the present invention further provides a terminal device 120. The terminal device 120 includes at least a memory 1201, a microprocessor 1203 connected to the memory 1201 by using a bus 1202, and an application processor 1205 connected to the microprocessor 1203 by using a bus 1204, where
the memory 1201 is adapted to store a data reporting program;
the microprocessor 1203 is adapted to invoke the data reporting program stored by the memory 1201 to execute the following operations:
determining, by using current touch operation information, an area that is on a current interface of a touchscreen and in which the current touch operation information is located, and using the area as an operation area;
determining attribute information of the operation area based on a correspondence between an area and attribute information, where the attribute information of the operation area includes a rate type of an area reported point of the operation area and touch operation information to which the operation area can respond; and
determining, from the current touch operation information according to the current touch operation information and the attribute information of the operation area, touch data reported to the application processor 1205, and reporting the data; and
the application processor 1205 is adapted to receive the data reported by the microprocessor 1203.

An interface of a touchscreen generally includes multiple areas, such as a key area and a handwriting area. Different areas have different data reporting requirements. For example, a relatively low report rate is required in the key area, and a relatively high report rate is required in a drawing area, the handwriting area, and the like. From this point of view, the microprocessor of the terminal device provided in this embodiment of the present invention acquires attribute information corresponding to each area on a current interface of a touchscreen in advance; after receiving touch operation information, in order to determine reported data, needs to first determine an area in which the touch operation information is located; and after determining the area in which the touch operation information is located, may further determine reported touch data according to attribute information corresponding to the determined area. The microprocessor of the terminal device provided in this embodiment of the present invention may determine, according to attribute information of an area in which current touch operation information is located and the current touch operation information, touch data reported to an application processor, so that areas that have different data reporting requirements report touch data by using different report rates. Compared with that a touchscreen always reports touch data according to a highest report rate in the prior art, according to the data terminal device provided in this embodiment, a quantity of interrupts is reduced for an application processor, and usage of the application processor is decreased, thereby reducing power consumption generated when the application processor processes a touchscreen interrupt event.

In the foregoing embodiment, that the microprocessor 1203 is adapted to determine, from the current touch operation information according to the current touch operation information and the attribute information of the operation area, touch data reported to the application processor, and report the data includes: determining, by using the touch operation information to which the operation area can respond, whether the current touch operation information can be responded to by the operation area; determining, by using the current touch operation information, an operation type of the current touch operation information when the current touch operation information can be responded to by the operation area; and configuring a preset quantity of reported points for the current touch operation information when the operation type of the current touch operation information is a touch-tap type, determining, from the current touch operation information according to the preset quantity of reported points, the touch data reported to the application processor, and reporting the data; or determining a report rate of the current touch operation information according to the rate type of the area reported point of the operation area when the operation type of the current touch operation information is a consecutive type, determining, from the current touch operation information according to the determined report rate, the touch data reported to the application processor, and reporting the data.

There are multiple manners of determining the operation type of the current touch operation information by using the current touch operation information.

In a possible implementation manner, that the microprocessor 1203 is adapted to determine, by using the current touch operation information, an operation type of the current touch operation information when the current touch operation information can be responded to by the operation area includes: acquiring a coordinate set of the current touch operation information when the current touch operation information can be responded to by the operation area, where the coordinate set includes at least two location coordinates of the current touch operation information; determining whether the coordinate set is within a preset range; and if the coordinate set is within the preset range, determining that the operation type of the current touch operation information is the touch-tap type; or if the coordinate set is not within the preset range, determining that the operation type of the current touch operation information is the consecutive type.

In another possible implementation manner, that the microprocessor 1203 is adapted to determine, by using the current touch operation information, an operation type of the current touch operation information when the current touch operation information can be responded to by the operation area includes: determining a touch speed of the current touch operation information when the current touch operation information can be responded to by the operation area; determining whether the touch speed of the current touch operation information is less than a set speed value; and if the touch speed of the current touch operation information is less than the set speed value, determining that the type of the current touch operation information is the touch-tap type; or if the touch speed of the current touch operation information is greater than or equal to the set speed value, determining that the type of the current touch operation information is the consecutive type.

Further, that the microprocessor 1203 is adapted to configure a preset quantity of reported points for the current touch operation information when the operation type of the current touch operation information is a touch-tap type, determine, from the current touch operation information according to the preset quantity of reported points, the touch data reported to the application processor, and report the data includes: configuring a preset quantity of reported points for the current touch operation information when the operation type of the current touch operation information is the touch-tap type, where the preset quantity of reported points is 2; and determining, from the current touch operation information according to the preset quantity 2 of reported points, that the touch data reported to the application processor is start touch data and end touch data, and reporting the start touch data and the end touch data.

Still further, that the microprocessor 1203 is adapted to report the start touch data and the end touch data includes: determining whether a touch time of a current touch operation of the touch-tap type is greater than preset duration; and if the touch time of the current touch operation of the touch-tap type is greater than the preset duration, reporting the start touch data first, and when the touch operation of the touch-tap type ends, reporting the end touch data; or if the touch time of the current touch operation of the touch-tap type is less than or equal to the preset duration, reporting the start touch data and the end touch data simultaneously.

In the foregoing embodiment, there are multiple implementation manners of determining the report rate of the current touch operation information according to the rate type of the area reported point of the operation area when it is determined that the operation type of the current touch operation information is the consecutive type.

In a possible implementation manner, a report rate corresponding to a high-speed point reporting area and a report rate corresponding to a low-speed point reporting area are preset, and that the microprocessor 1203 is adapted to determine a report rate of the current touch operation information according to the rate type of the area reported point of the operation area includes: determining, according to the rate type of the area reported point of the operation area, whether the operation area is the high-speed point reporting area or the low-speed point reporting area; and when the operation area is the high-speed point reporting area, determining the report rate corresponding to the high-speed point reporting area as the report rate of the current touch operation information; or when the operation area is the low-speed point reporting area, determining the report rate corresponding to the low-speed point reporting area as the report rate of the current touch operation information.

In another possible implementation manner, the attribute information of the operation area further includes an original report rate of the operation area, and that the microprocessor 1203 is adapted to determine a report rate of the current touch operation information according to the rate type of the area reported point of the operation area includes: determining, according to the rate type of the area reported point of the operation area, whether the operation area is a high-speed point reporting area or a low-speed point reporting area; and when the operation area is the high-speed point reporting area, determining the original report rate of the operation area as the report rate of the current touch operation information, or adjusting the original report rate of the operation area according to a preset report rate adjustment rule, so that a report rate obtained by means of adjustment is greater than the original report rate of the operation area, and determining the report rate obtained by means of adjustment as the report rate of the current touch operation information; or when the operation area is the low-speed point reporting area, adjusting the original report rate of the operation area according to a preset report rate adjustment rule, so that a report rate obtained by means of adjustment is less than the original report rate of the operation area, and determining the report rate obtained by means of adjustment as the report rate of the current touch operation information.

Optionally, the microprocessor 1203 is further adapted to: when the current touch operation information cannot be responded to by the operation area, skip reporting the current touch operation information.

The embodiments of the present specification are described in a progressive manner. The focus of each embodiment is placed on a difference from other embodiments. The same or similar parts of the embodiments can be referenced mutually. The apparatus disclosed in the embodiments is described relatively simply because it corresponds to the method disclosed in the embodiments, and for portions related to those of the method, reference may be made to the description of the method.

It should be noted that, in this specification, relationship terms such as first and second are merely used to distinguish an entity or operation from another entity or operation, but do not require or imply any actual relationship or sequence between these entities or operations. Moreover, the terms "include", "comprise", and any variation thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, method, object, or device which includes the element.

For ease of description, the foregoing apparatus is described by dividing the functions into various units. Surely, when the present application is implemented, the functions of each unit may be implemented in one or more pieces of software and/or hardware.

It may be learned from description of the foregoing implementation manners that, a person skilled in the art may clearly understand that the present application may be implemented by using software in addition to a necessary universal hardware platform. Based on such an understanding, the technical solutions of the present application essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, or a network device) to perform the methods described in the embodiments or in some parts of the embodiments of the present application.

The embodiments disclosed above are described to enable a person skilled in the art to implement or use the present application. Various modifications made to the embodiments will be obvious to a person skilled in the art, and the general principles defined herein may also be implemented in other embodiments without departing from the spirit or scope of the present application. Therefore, the present application is not intended to be limited to these embodiments illustrated herein, but shall be construed in the widest scope consistent with the principles and novel features disclosed herein.

## Claims

1. A data reporting method, comprising:
receiving current touch operation information;
determining, by using the current touch operation information, an area that is on a current interface of a touchscreen and in which the current touch operation information is located, and using the area as an operation area;
determining attribute information of the operation area based on a correspondence between an area and attribute information, wherein the attribute information of the operation area comprises a rate type of an area reported point of the operation area and touch operation information to which the operation area can respond; and
determining, from the current touch operation information according to the current touch operation information and the attribute information of the operation area, touch data reported to an application processor, and reporting the data.

2. The method according to claim 1, wherein the determining, from the current touch operation information according to the current touch operation information and the attribute information of the operation area, touch data reported to an application processor, and reporting the data comprises:
determining, by using the touch operation information to which the operation area can respond, whether the current touch operation information can be responded to by the operation area;
determining, by using the current touch operation information, an operation type of the current touch operation information when the current touch operation information can be responded to by the operation area; and
configuring a preset quantity of reported points for the current touch operation information when the operation type of the current touch operation information is a touch-tap type, determining, from the current touch operation information according to the preset quantity of reported points, the touch data reported to the application processor, and reporting the data; or
determining a report rate of the current touch operation information according to the rate type of the area reported point of the operation area when the operation type of the current touch operation information is a consecutive type, determining, from the current touch operation information according to the determined report rate, the touch data reported to the application processor, and reporting the data.

3. The method according to claim 2, wherein the determining, by using the current touch operation information, an operation type of the current touch operation information when the current touch operation information can be responded to by the operation area comprises:
acquiring a coordinate set of the current touch operation information when the current touch operation information can be responded to by the operation area, wherein the coordinate set comprises at least two location coordinates of the current touch operation information;
determining whether the coordinate set is within a preset range; and
if the coordinate set is within the preset range, determining that the operation type of the current touch operation information is the touch-tap type; or
if the coordinate set is not within the preset range, determining that the operation type of the current touch operation information is the consecutive type.

4. The method according to claim 2, wherein the determining, by using the current touch operation information, an operation type of the current touch operation information when the current touch operation information can be responded to by the operation area comprises:
determining a touch speed of the current touch operation information when the current touch operation information can be responded to by the operation area;
determining whether the touch speed of the current touch operation information is less than a set speed value; and
if the touch speed of the current touch operation information is less than the set speed value, determining that the type of the current touch operation information is the touch-tap type; or
if the touch speed of the current touch operation information is greater than or equal to the set speed value, determining that the type of the current touch operation information is the consecutive type.

5. The method according to claim 2, wherein the configuring a preset quantity of reported points for the current touch operation information when the operation type of the current touch operation information is a touch-tap type, determining, from the current touch operation information according to the preset quantity of reported points, the touch data reported to the application processor, and reporting the data comprises:
configuring a preset quantity of reported points for the current touch operation information when the operation type of the current touch operation information is the touch-tap type, wherein the preset quantity of reported points is 2; and
determining, from the current touch operation information according to the preset quantity 2 of reported points, that the touch data reported to the application processor is start touch data and end touch data, and reporting the start touch data and the end touch data.

6. The method according to claim 5, wherein the reporting the start touch data and the end touch data is specifically as follows:
determining whether a touch time of a current touch operation of the touch-tap type is greater than preset duration; and
if the touch time of the current touch operation of the touch-tap type is greater than the preset duration, reporting the start touch data first, and when the touch operation of the touch-tap type ends, reporting the end touch data; or
if the touch time of the current touch operation of the touch-tap type is less than or equal to the preset duration, reporting the start touch data and the end touch data simultaneously.

7. The method according to claim 2, wherein a report rate corresponding to a high-speed point reporting area and a report rate corresponding to a low-speed point reporting area are preset, wherein the report rate corresponding to the high-speed point reporting area is greater than the report rate corresponding to the low-speed point reporting area; and the determining a report rate of the current touch operation information according to the rate type of the area reported point of the operation area comprises:
determining, according to the rate type of the area reported point of the operation area, whether the operation area is the high-speed point reporting area or the low-speed point reporting area; and
when the operation area is the high-speed point reporting area, determining the report rate corresponding to the high-speed point reporting area as the report rate of the current touch operation information; or
when the operation area is the low-speed point reporting area, determining the report rate corresponding to the low-speed point reporting area as the report rate of the current touch operation information.

8. The method according to claim 2, wherein the attribute information of the operation area further comprises an original report rate of the operation area, and
the determining a report rate of the current touch operation information according to the rate type of the area reported point of the operation area comprises:
determining, according to the rate type of the area reported point of the operation area, whether the operation area is a high-speed point reporting area or a low-speed point reporting area; and
when the operation area is the high-speed point reporting area, determining the original report rate of the operation area as the report rate of the current touch operation information, or adjusting the original report rate of the operation area according to a preset report rate adjustment rule, so that a report rate obtained by means of adjustment is greater than the original report rate of the operation area, and determining the report rate obtained by means of adjustment as the report rate of the current touch operation information; or
when the operation area is the low-speed point reporting area, adjusting the original report rate of the operation area according to a preset report rate adjustment rule, so that a report rate obtained by means of adjustment is less than the original report rate of the operation area, and determining the report rate obtained by means of adjustment as the report rate of the current touch operation information.

9. The method according to claim 2, further comprising:
when the current touch operation information cannot be responded to by the operation area, skipping reporting the current touch operation information.

10. A data reporting apparatus, comprising:
a receiving unit, adapted to receive current touch operation information;
a processing unit, adapted to determine, by using the current touch operation information received by the receiving unit, an area that is on a current interface of a touchscreen and in which the current touch operation information is located, and use the area as an operation area; determine attribute information of the operation area based on a correspondence between an area and attribute information; and determine, from the current touch operation information according to the current touch operation information and the attribute information of the operation area, touch data reported to an application processor, wherein the attribute information of the operation area comprises a rate type of an area reported point of the operation area and touch operation information to which the operation area can respond; and
a sending unit, adapted to report the touch data determined by the processing unit to the application processor.

11. The apparatus according to claim 10, wherein the processing unit comprises:
an information responding determining subunit, adapted to determine, by using the touch operation information to which the operation area can respond, whether the current touch operation information can be responded to by the operation area;
an operation type determining subunit, adapted to determine, by using the current touch operation information, an operation type of the current touch operation information when the information responding determining subunit determines that the current touch operation information can be responded to by the operation area; and
a reported data determining subunit, adapted to configure a preset quantity of reported points for the current touch operation information when the operation type determining subunit determines that the operation type of the current touch operation information is a touch-tap type, and determine, from the current touch operation information according to the preset quantity of reported points, the touch data reported to the application processor; or determine a report rate of the current touch operation information according to the rate type of the area reported point of the operation area when the operation type determining subunit determines that the operation type of the current touch operation information is a consecutive type, and determine, from the current touch operation information according to the determined report rate, the touch data reported to the application processor.

12. The apparatus according to claim 11, wherein the operation type determining subunit comprises:
an acquiring module, adapted to acquire a coordinate set of the current touch operation information when the current touch operation information can be responded to by the operation area;
a first judging module, adapted to determine whether the coordinate set acquired by the acquiring module is within a preset range; and
a first operation type determining module, adapted to: when the first judging module determines that the coordinate set is within the preset range, determine that the operation type of the current touch operation information is the touch-tap type; or when the first judging module determines that the coordinate set is not within the preset range, determine that the operation type of the current touch operation information is the consecutive type, wherein the coordinate set comprises at least two location coordinates of the current touch operation information.

13. The apparatus according to claim 11, wherein the operation type determining subunit comprises:
a determining module, adapted to determine a touch speed of the current touch operation information when the current touch operation information can be responded to by the operation area;
a second judging module, adapted to determine whether the touch speed that is of the current touch operation information and that is determined by the determining module is less than a set speed value; and
a second operation type determining module, adapted to: when the second judging module determines that the touch speed of the current touch operation information is less than the set speed value, determine that the type of the current touch operation information is the touch-tap type; or when the second judging module determines that the touch speed of the current touch operation information is greater than or equal to the set speed value, determine that the type of the current touch operation information is the consecutive type.

14. The apparatus according to claim 11, wherein the reported data determining subunit comprises:
a configuring module, adapted to configure the preset quantity of reported points for the current touch operation information when the operation type of the current touch operation information is the touch-tap type, wherein the preset quantity of reported points is 2; and
a reported data determining module, adapted to determine, from the current touch operation information according to the preset quantity 2 that is of reported points and is configured by the configuring module, that the touch data reported to the application processor is start touch data and end touch data.

15. The apparatus according to claim 14, wherein the reported data determining module comprises:
a judging sub-module, adapted to: when it is determined that the two-point reported information is the start touch data and the end touch data, determine whether a touch time of a current touch operation of the touch-tap type is greater than preset duration; wherein
the sending unit is specifically adapted to: when the judging sub-module determines that the touch time of the current touch operation of the touch-tap type is greater than the preset duration, report the start touch data first, and when the touch operation of the touch-tap type ends, report the end touch data; or when the judging sub-module determines that the touch time of the current touch operation of the touch-tap type is less than or equal to the preset duration, report the start touch data and the end touch data simultaneously.

16. The apparatus according to claim 11, wherein a report rate corresponding to a high-speed point reporting area and a report rate corresponding to a low-speed point reporting area are preset, wherein the report rate corresponding to the high-speed point reporting area is greater than the report rate corresponding to the low-speed point reporting area; and
the reported data determining subunit comprises:
a first area determining module, adapted to determine, according to the rate type of the area reported point of the operation area, whether the operation area is the high-speed point reporting area or the low-speed point reporting area; and
a first report rate determining module, adapted to: when the first area determining module determines that the operation area is the high-speed point reporting area, determine the report rate corresponding to the high-speed point reporting area as the report rate of the current touch operation information; or when the first area determining module determines that the operation area is the low-speed point reporting area, determine the report rate corresponding to the low-speed point reporting area as the report rate of the current touch operation information.

17. The apparatus according to claim 11, wherein the attribute information of the operation area further comprises an original report rate of the operation area, and
the reported data determining subunit comprises:
a second area determining module, adapted to determine, according to the rate type of the area reported point of the operation area, whether the operation area is a high-speed point reporting area or a low-speed point reporting area; and
a second report rate determining module, adapted to: when the second area determining module determines that the operation area is the high-speed point reporting area, determine the original report rate of the operation area as the report rate of the current touch operation information, or adjust the original report rate of the operation area according to a preset report rate adjustment rule, so that a report rate obtained by means of adjustment is greater than the original report rate of the operation area, and determine the report rate obtained by means of adjustment as the report rate of the current touch operation information; or when the second area determining module determines that the operation area is the low-speed point reporting area, adjust the original report rate of the operation area according to a preset report rate adjustment rule, so that a report rate obtained by means of adjustment is less than the original report rate of the operation area, and determine the report rate obtained by means of adjustment as the report rate of the current touch operation information.

18. The apparatus according to claim 11, wherein the processing unit is further adapted to: when the current touch operation information cannot be responded to by the operation area, skip reporting the current touch operation information.

19. A terminal device, comprising a memory, a microprocessor connected to the memory by using a bus, and an application processor connected to the microprocessor by using a bus, wherein
the memory is adapted to store a data reporting program;
the microprocessor is adapted to invoke the data reporting program stored by the memory to execute the following operations:
determining, by using the current touch operation information, an area that is on a current interface of a touchscreen and in which the current touch operation information is located, and using the area as an operation area;
determining attribute information of the operation area based on a correspondence between an area and attribute information, wherein the attribute information of the operation area comprises a rate type of an area reported point of the operation area and touch operation information to which the operation area can respond; and
determining, from the current touch operation information according to the current touch operation information and the attribute information of the operation area, touch data reported to the application processor, and reporting the data; and
the application processor is adapted to receive the data reported by the microprocessor.

20. The terminal device according to claim 19, wherein that the microprocessor is adapted to determine, from the current touch operation information according to the current touch operation information and the attribute information of the operation area, touch data reported to the application processor, and report the data comprises:
determining, by using the touch operation information to which the operation area can respond, whether the current touch operation information can be responded to by the operation area;
determining, by using the current touch operation information, an operation type of the current touch operation information when the current touch operation information can be responded to by the operation area; and
configuring a preset quantity of reported points for the current touch operation information when the operation type of the current touch operation information is a touch-tap type, determining, from the current touch operation information according to the preset quantity of reported points, the touch data reported to the application processor, and reporting the data; or
determining a report rate of the current touch operation information according to the rate type of the area reported point of the operation area when the operation type of the current touch operation information is a consecutive type, determining, from the current touch operation information according to the determined report rate, the touch data reported to the application processor, and reporting the data.

21. The terminal device according to claim 20, wherein that the microprocessor is adapted to determine, by using the current touch operation information, an operation type of the current touch operation information when the current touch operation information can be responded to by the operation area comprises:
acquiring a coordinate set of the current touch operation information when the current touch operation information can be responded to by the operation area, wherein the coordinate set comprises at least two location coordinates of the current touch operation information;
determining whether the coordinate set is within a preset range; and
if the coordinate set is within the preset range, determining that the operation type of the current touch operation information is the touch-tap type; or if the coordinate set is not within the preset range, determining that the operation type of the current touch operation information is the consecutive type.

22. The terminal device according to claim 20, wherein that the microprocessor is adapted to determine, by using the current touch operation information, an operation type of the current touch operation information when the current touch operation information can be responded to by the operation area comprises:
determining a touch speed of the current touch operation information when the current touch operation information can be responded to by the operation area;
determining whether the touch speed of the current touch operation information is less than a set speed value; and
if the touch speed of the current touch operation information is less than the set speed value, determining that the type of the current touch operation information is the touch-tap type; or if the touch speed of the current touch operation information is greater than or equal to the set speed value, determining that the type of the current touch operation information is the consecutive type.

23. The terminal device according to claim 20, wherein that the microprocessor is adapted to configure a preset quantity of reported points for the current touch operation information when the operation type of the current touch operation information is a touch-tap type, determine, from the current touch operation information according to the preset quantity of reported points, the touch data reported to the application processor, and report the data comprises:
configuring a preset quantity of reported points for the current touch operation information when the operation type of the current touch operation information is the touch-tap type, wherein the preset quantity of reported points is 2; and
determining, from the current touch operation information according to the preset quantity 2 of reported points, that the touch data reported to the application processor is start touch data and end touch data, and reporting the start touch data and the end touch data.

24. The terminal device according to claim 23, wherein that the microprocessor is adapted to report the start touch data and the end touch data comprises:
determining whether a touch time of a current touch operation of the touch-tap type is greater than preset duration; and
if the touch time of the current touch operation of the touch-tap type is greater than the preset duration, reporting the start touch data first, and when the touch operation of the touch-tap type ends, reporting the end touch data; or if the touch time of the current touch operation of the touch-tap type is less than or equal to the preset duration, reporting the start touch data and the end touch data simultaneously.

25. The terminal device according to claim 20, wherein a report rate corresponding to a high-speed point reporting area and a report rate corresponding to a low-speed point reporting area are preset, wherein the report rate corresponding to the high-speed point reporting area is greater than the report rate corresponding to the low-speed point reporting area; and
that the microprocessor is adapted to determine a report rate of the current touch operation information according to the rate type of the area reported point of the operation area comprises:
determining, according to the rate type of the area reported point of the operation area, whether the operation area is the high-speed point reporting area or the low-speed point reporting area; and when the operation area is the high-speed point reporting area, determining the report rate corresponding to the high-speed point reporting area as the report rate of the current touch operation information; or when the operation area is the low-speed point reporting area, determining the report rate corresponding to the low-speed point reporting area as the report rate of the current touch operation information.

26. The terminal device according to claim 20, wherein the attribute information of the operation area further comprises an original report rate of the operation area, and
that the microprocessor is adapted to determine a report rate of the current touch operation information according to the rate type of the area reported point of the operation area comprises:
determining, according to the rate type of the area reported point of the operation area, whether the operation area is a high-speed point reporting area or a low-speed point reporting area; and when the operation area is the high-speed point reporting area, determining the original report rate of the operation area as the report rate of the current touch operation information, or adjusting the original report rate of the operation area according to a preset report rate adjustment rule, so that a report rate obtained by means of adjustment is greater than the original report rate of the operation area, and determining the report rate obtained by means of adjustment as the report rate of the current touch operation information; or when the operation area is the low-speed point reporting area, adjusting the original report rate of the operation area according to a preset report rate adjustment rule, so that a report rate obtained by means of adjustment is less than the original report rate of the operation area, and determining the report rate obtained by means of adjustment as the report rate of the current touch operation information.

27. The terminal device according to claim 20, wherein the microprocessor is further adapted to: when the current touch operation information cannot be responded to by the operation area, skip reporting the current touch operation information.
